# EUROPEAN PATENT APPLICATION

(11) **EP 3 591 591 A1**
(43) Date of publication of application: **08.01.2020**
(21) Application number: 17898705.3
(22) Date of filing: 27.12.2017
(51) Int. Cl.: G06Q 10/06, G06Q 50/20, G09B 5/00

(54) **INFORMATION PROCESSING DEVICE AND INFORMATION PROCESSING METHOD**

(30) Priority: 01.03.2017 JP 2017037862
(71) Applicant: Sony Corporation, Tokyo 108-0075 (JP)
(72) Inventor: LAWRENSON, Matthew, 1015 Lausanne (CH); ISOZU, Masaaki, Tokyo 141-0031 (JP)
(74) Representative: MFG Patentanwälte Meyer-Wildhagen Meggle-Freund Gerhard PartG mbB
(86) International application number: PCT/JP2017/047021
(87) International publication number: WO 2018/159092

(57) **Abstract**

An information processing apparatus including a processing unit that certifies a second learning credit on the basis of a first learning credit that is certified on the basis of learning information and a predetermined condition, and registers information concerning the certified second learning credit in a P2P database.

## Description

### TECHNICAL FIELD

The present disclosure relates to an information processing apparatus and an information processing method.

### BACKGROUND ART

Generally, the degree of learning proficiency is evaluated on the basis of a curriculum defined by a school or a public organization equivalent to a school. For example, a learner takes a test after taking a 10-hour lecture, and the degree of mastery is evaluated on the basis of the score of the test.

However, in recent years, attention has been paid to learning in a short time (hereinafter also referred to as microlearning), which is not long-term learning as described above. For example, a person may learn from a conversation of about 10 minutes, and learning by accumulating such short-term learning is important.

Patent Document 1 discloses a system for managing microlearning as described above. The system disclosed in Patent Document 1 manages microlearning by managing the purchase, sale, and performance of applications concerning microlearning.

### CITATION LIST

### PATENT DOCUMENT

Patent Document 1: U.S. Patent Application Laid-Open No. 2014/0343996

### SUMMARY OF THE INVENTION

### PROBLEMS TO BE SOLVED BY THE INVENTION

However, the technology disclosed in Patent Document 1 is not sufficient to manage the learning of a user because the technology manages a specific learning sold in an application.

Accordingly, in the present disclosure, an information processing apparatus and an information processing method capable of appropriately managing learning by a user are proposed.

### SOLUTIONS TO PROBLEMS

According to the present disclosure, there is provided an information processing apparatus including a processing unit that certifies a second learning credit on the basis of a first learning credit that is certified on the basis of learning information and a predetermined condition, and registers information concerning the certified second learning credit in a P2P database.

Furthermore, according to the present disclosure, there is provided an information processing method causing a computer to certify a second learning credit on the basis of a first learning credit that is certified on the basis of learning information and a predetermined condition, and register information concerning the certified second learning credit in a P2P database.

### EFFECTS OF THE INVENTION

In accordance with the present disclosure, extensive microlearning management is provided.

Note that the above effects are not necessarily limited, and any of the effects described in the present specification or other effects that can be grasped from the present specification may be produced in addition to or in place of the above effects.

### BRIEF DESCRIPTION OF THE DRAWINGS

Fig. 1 is a diagram schematically illustrating a block chain system according to an embodiment of the present disclosure.
Fig. 2 is a diagram schematically illustrating the block chain system according to the embodiment of the present disclosure.
Fig. 3 is a diagram schematically illustrating the block chain system according to the embodiment of the present disclosure.
Fig. 4 is a diagram schematically illustrating a configuration of a learning management system according to the embodiment of the present disclosure.
Fig. 5 is a block diagram illustrating one example of a functional configuration of a learning apparatus according to the embodiment of the present disclosure.
Fig. 6 is a block diagram illustrating an example of a functional configuration of a server according to the embodiment of the present disclosure.
Fig. 7 is a diagram illustrating an example of an information processing method in the embodiment of the present disclosure.
Fig. 8 is a diagram illustrating an example of the information processing method in the embodiment of the present disclosure.
Fig. 9 is a diagram illustrating a process in which a microlearning credit and a comprehensive learning credit are certified in the embodiment of the present disclosure.
Fig. 10 is a diagram illustrating an example of information managed by the block chain system in the embodiment of the present disclosure.
Fig. 11 is a diagram illustrating an example of a hardware configuration of the learning apparatus according to the embodiment of the present disclosure.
Fig. 12 is a diagram illustrating an example of a hardware configuration of a server according to the embodiment of the present disclosure.

### DETAILED DESCRIPTION OF THE INVENTION

A preferred embodiment of the present disclosure will now be described in detail with reference to the accompanying drawings. Note that in the present specification and the drawings, components having substantially the same functional configuration are denoted by the same reference numerals, and redundant description thereof is omitted.

Note that the description will be made in the following order.
0. Overview of Peer-to-Peer Database
1. Overview of Learning Management System
2. Configuration of Apparatus constituting Learning Management System
3. Information Processing Method in Learning Management System
4. Hardware Configuration of Each Device
5. Additional Notes
6. Conclusion

### <0. Overview of Peer-to-Peer Database>

In a learning management system according to the present embodiment, a distributed peer-to-peer database distributed in a peer-to-peer network is used. Note that the peer-to-peer network is sometimes referred to as a peer-to-peer distributed file system. Hereinafter, a peer-to-peer network may be referred to as a "P2P network", and a peer-to-peer database may be referred to as a "P2P Database". As an example of the P2P database, block chain data distributed in the P2P network may be used. Therefore, a block chain system will be described first.

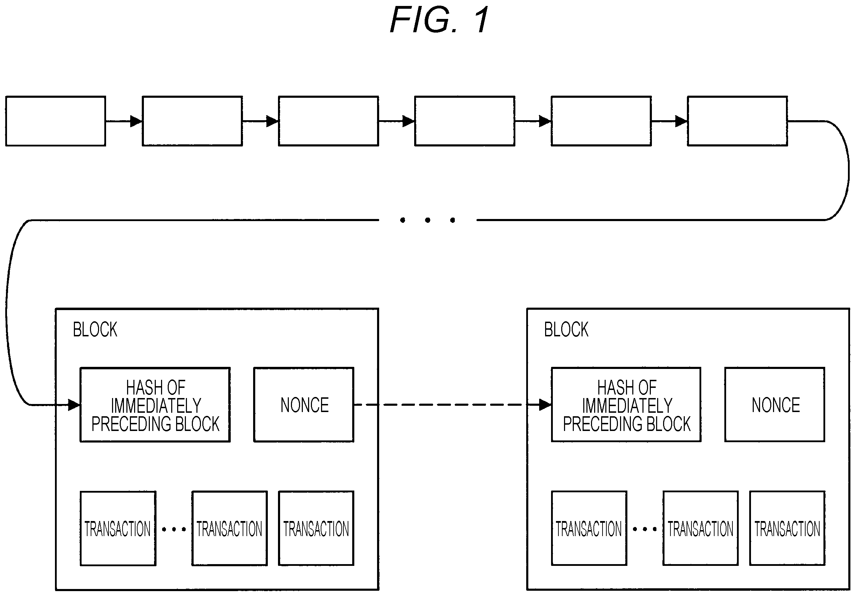

As illustrated in Fig. 1, the block chain data according to the present embodiment is data in which multiple blocks are contained while being connected in a chain-like manner. In each block, one or more target data may be stored as a transaction (transaction).

The block chain data according to the present embodiment includes, for example, block chain data used for exchanging data in a virtual currency such as Bitcoin. The block chain data used to exchange virtual currency data includes, for example, a hash of an immediately preceding block and a special value called nonce. The hash of the immediately preceding block is used to determine whether or not the present block is a "correct block" that is correctly sequenced from the immediately preceding block. The nonce is used to prevent spoofing in hash-based authentication and tampering is prevented by using the nonce. The nonce includes, for example, a character string, a number string, or data indicating a combination thereof.

Furthermore, in the block chain data, the data of each transaction is digitally signed using an encryption key or encrypted using an encryption key. Furthermore, the data of each transaction is published and shared across the P2P network.

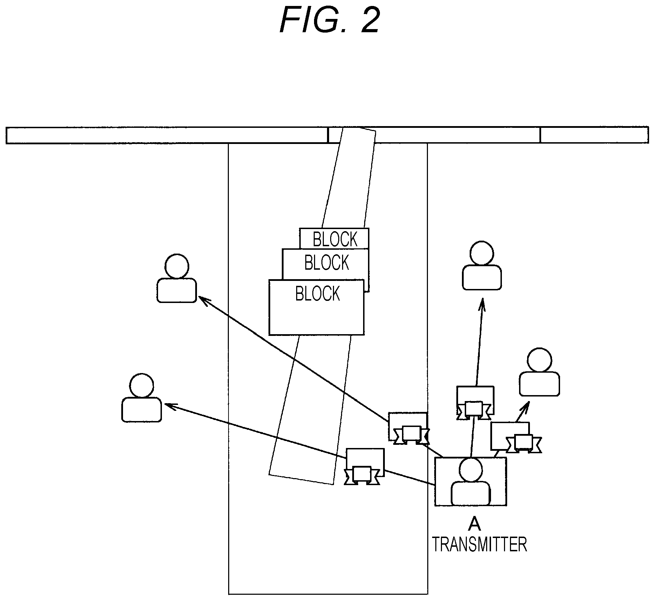

Fig. 2 illustrates how target data is registered by a user A in the block chain system. The user A digitally signs the target data to be registered in the block chain data using the private key of the user A. Then, the user A broadcasts on the network a transaction including the digitally signed target data. Accordingly, it is secured that the holder of the target data is the user A.

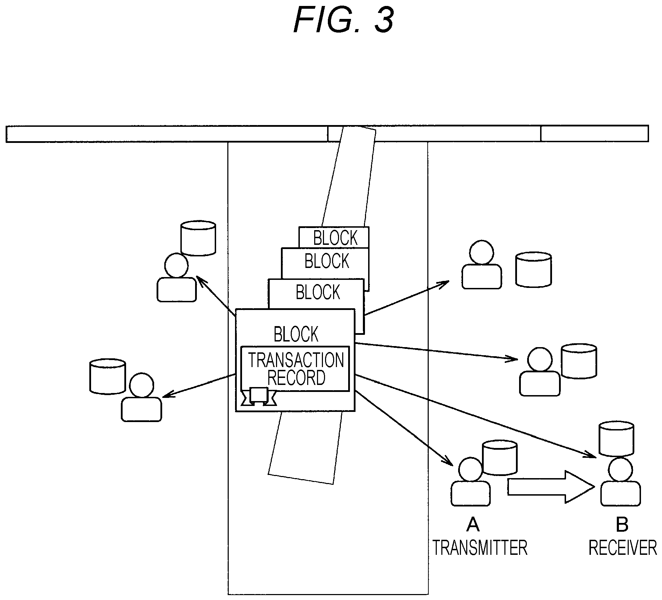

Fig. 3 is a diagram illustrating how the target data is transferred from the user A to a user B in the block chain system. The user A digitally signs the transaction using the private key of the user A, and includes the public key of the user B in the transaction. Accordingly, it is indicated that the target data has been transferred from the user A to the user B. In addition, the user B may acquire the public key of the user A from the user A when the target data is traded, and acquire the target data which has been digitally signed or encrypted.

Further, in the block chain system, for example, by using a side-chain technology, it is possible to include other target data different from the virtual currency in the block chain data used for exchanging data of the existing virtual currency, such as the Bitcoin block chain data. Here, the other target data different from the virtual currency in this embodiment is information concerning a learning credit.

As described above, the block chain data is used for the management of the information concerning the learning credit, so that the information concerning the learning credit is retained on the network in a state where the information is not altered. Furthermore, by using the block chain data, when a third party who wants to use the information contained in the block chain has a predetermined authority, the third party can access the information contained in the block chain. Note that the information concerning the learning credit managed in this embodiment will be described later.

### <1. Overview of Learning Management System>

The block chain system used in the learning management system according to the embodiment of the present disclosure has been described above. An overview of the learning management system according to the embodiment of the present disclosure is described below.

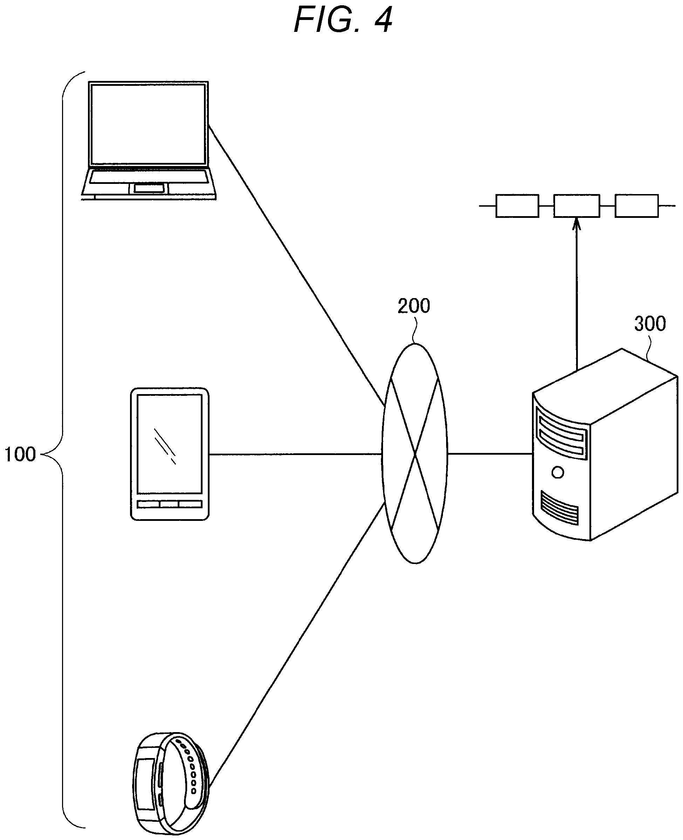

Fig. 4 is a diagram illustrating a configuration of the learning management system of the present embodiment. The learning management system of the present embodiment includes a learning apparatus 100, a network 200, and a server 300. Note that the learning apparatus 100 and the server 300 are an example of an information processing apparatus that executes the information processing of the present embodiment.

The learning apparatus 100 is equipment used by a user for learning. For example, the user performs learning by reading a book or receiving a lecture using the learning apparatus 100. Furthermore, the server 300 performs processing concerning a microlearning credit (first learning credit) and/or a comprehensive learning credit (second learning credit), which will be described later, on the basis of information from the learning apparatus 100. Here, the microlearning credit is a credit certified by the microlearning described above. Furthermore, the comprehensive learning credit is a credit certified on the basis of a predetermined condition concerning the microlearning credit. For example, the comprehensive learning credit may be certified on the basis of the predetermined number of microlearning credits being certified. Furthermore, in the learning management system of the present embodiment, when the comprehensive learning credit is certified, the server 300 registers information concerning the comprehensive learning credit in the block chain data.

By managing the information concerning the learning credit in this way, information concerning a wide range of microlearning is managed. In addition, information concerning the learning credit is retained on the network in a state where the learning credit is not altered. Furthermore, when a third party who wants to use the information contained in the block chain has a predetermined authority, the third party can access the information contained in the block chain.

Next, each configuration of the learning management system will be described in more detail. The learning apparatus 100 is an information processing apparatus owned by a user. The learning apparatus 100 stores learning information. Furthermore, the learning apparatus 100 may acquire learning information via a network. The learning information includes, for example, text data, audio data, image data (including still and moving images), action data, and the like.

Note that the text data includes text data concerning a book such as a textbook. Furthermore, the audio data includes audio data concerning a lecture. Furthermore, the image data includes image data concerning a lecture.

The action data indicates information concerning the action of a user, which is acquired by a sensor (for example, an acceleration sensor or a gyro sensor) included in the learning apparatus 100. For example, the action data may be information indicating that a user is walking, running, or performing an action concerning a particular exercise or competition. Specifically, actions concerning a particular exercise or competition include actions such as the user swimming, the user swinging the bat, the user swinging the racket, and the user throwing the ball. Note that the action data may be obtained by comparing a waveform such as acceleration which is statistically calculated when the user performs each action with a waveform detected by the sensor.

Furthermore, the learning information includes formal learning information managed by a predetermined organization such as a school, and informal learning information not managed by the predetermined organization.

The formal learning information is, for example, information concerning a teaching material designated or distributed by a predetermined organization. Furthermore, the formal learning information also includes information concerning a lecture conducted by a predetermined organization.

The informal learning information includes, for example, information concerning a book purchased independently by the user. Furthermore, the informal learning information also includes information concerning a seminar to which the user has independently subscribed. In addition, the informal learning information includes information concerning a conversation conducted by the user with a third party.

Furthermore, in the learning management system of the present embodiment, the above learning information is managed in a microlearning credit that is short or small. For example, a microlearning credit concerning books may be managed for each page, or may be managed for each chapter or for each predetermined number of characters. Furthermore, the microlearning credit for conversation, lecture, or action may be managed at predetermined time intervals (for example, every minute, and every 10 minutes).

The user learns using the learning apparatus 100, and the learning apparatus 100 transmits information concerning the learning performed by the user to the server 300. For example, the information concerning the learning may include content of the learning information used for learning, learning time, and the like. Note that the learning apparatus 100 may include one device or a plurality of devices. For example, the learning apparatus 100 may be a smartphone or a laptop PC. Furthermore, the learning apparatus 100 may include a smart phone and a wearable terminal to be connected to the smart phone.

The server 300 evaluates information concerning learning transmitted from the learning apparatus 100. For example, the server 300 evaluates whether there is a relation between a topic concerning learning processing such as a curriculum or syllabus provided by a school or the like and learning information acquired from the learning apparatus 100. Furthermore, the server 300 evaluates whether or not the learning information acquired from the learning apparatus 100 is novel with respect to the topic concerning the curriculum or the syllabus provided by a school or the like.

Furthermore, the server 300 may also evaluate whether or not there is a relation between a topic registered in advance by a user and the learning information acquired from the learning apparatus 100. Further, the server 300 may evaluate whether or not the learning information acquired from the learning apparatus 100 has novelty with respect to the topic registered in advance by the user.

Here, the topic in the present embodiment includes various subjects. For example, the topic may include information concerning a subject designated by a predetermined organization, such as a school. For example, the subject includes foreign languages, mathematics, chemistry, physics, geology, history, and the like. Furthermore, the topic may be registered in advance by the user. For example, the user may register topics that the user learns privately, such as programming, cooking, engine control, mechanical engineering, meteorology, astronomy, and animation. Note that when the user registers a topic, information concerning a registered topic may be registered by the user for evaluation of relation and novelty of the learning information. Here, the information concerning the registered topic used for the evaluation of the relation and novelty of the learning information may be a term used in the topic or information generally known in the topic.

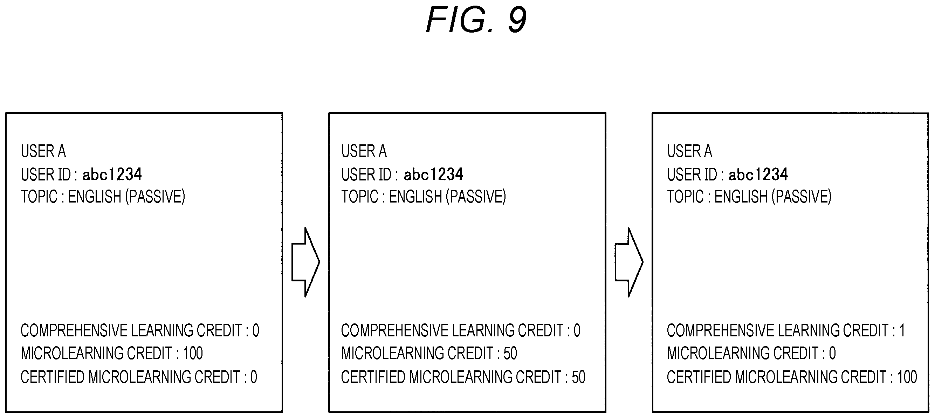

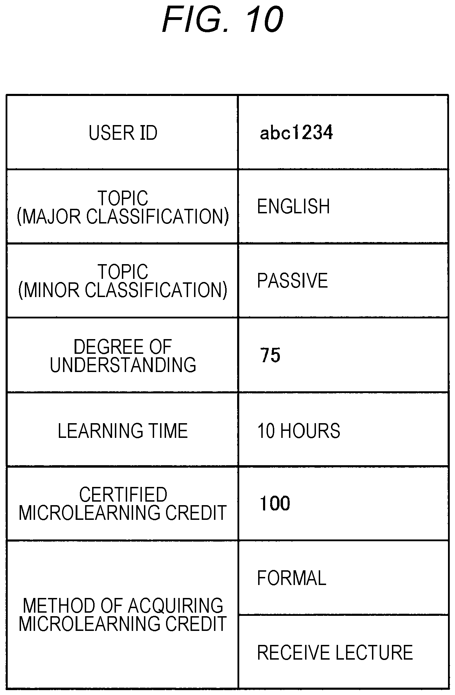

The server 300 performs certification of a microlearning credit on the basis of the relation and novelty evaluation described above. In addition, the server 300 certifies a comprehensive learning credit on the basis of the certified microlearning credit and a predetermined condition. Then, the server 300 registers information concerning the certified comprehensive learning credit in the block chain data. Note that a method for certifying each learning credit will be described later with reference to Fig. 9. Furthermore, the information concerning the comprehensive learning credit registered in the block chain data will be described later with reference to Fig. 10.

### <2. Configuration of Apparatus constituting Learning Management System>

The overview of the learning management system according to the embodiment of the present disclosure has been described above. The configuration of the device constituting the learning management system according to the embodiment of the present disclosure will be described below.

### (2-1. Configuration of Learning Apparatus 100)

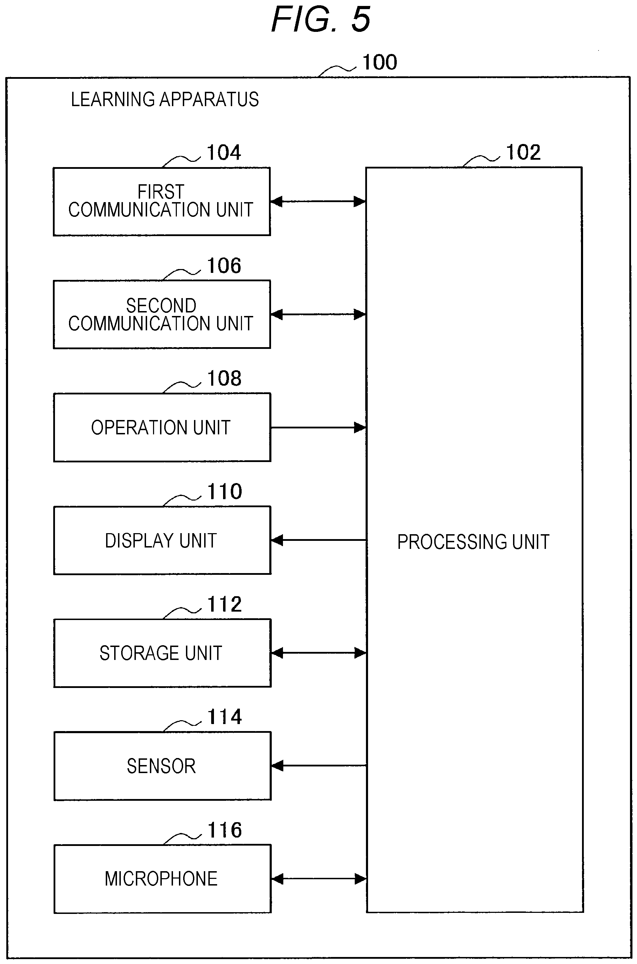

Fig. 5 is a diagram illustrating an example of the configuration of the learning apparatus 100 of the present embodiment. The learning apparatus 100 includes, for example, a processing unit 102, a first communication unit 104, a second communication unit 106, an operation unit 108, a display unit 110, a storage unit 112, a sensor 114, and a microphone 116.

The processing unit 102 processes a signal from each of the configurations of the learning apparatus 100. For example, the processing unit 102 decodes a signal sent from the first communication unit 104 or the second communication unit 106 to extract data. Furthermore, the processing unit 102 may process a signal from the operation unit 108 and issue an instruction with respect to an application executed in the processing unit 102. Furthermore, the processing unit 102 may read data from the storage unit 112 and perform processing on the read data. Furthermore, the processing unit 102 may process data acquired from the sensor 114 or the microphone 116.

The first communication unit 104 is a communication unit for connecting the learning apparatus 100 with an external network, and may perform communication using a communication system defined by, for example, a third generation partnership project (3GPP) or 3GPP2. The first communication unit 104 may perform communication using a communication system such as W-CDMA, a long term evolution (LTE), or CDMA 2000. Furthermore, the first communication unit 104 may download the learning information via the network. Note that the communication system described above is an example, and the communication system of the first communication unit 104 is not limited thereto.

The second communication unit 106 is a communication unit that performs communication with an external device by short-range radio, and may perform communication using, for example, a communication system (for example, Bluetooth (registered trade mark)) defined by an IEEE802 LAN/MAN Standards Committee. Furthermore, the second communication unit 106 may perform communication using a communication system such as Wi-Fi. Note that the communication system described above is an example, and the communication system of the second communication unit 106 is not limited thereto.

The operation unit 108 receives an operation on the learning apparatus 100 by the user. The user operates the operation unit 108 to perform an operation on an application executed by the learning apparatus 100, for example. Furthermore, the user operates the operation unit 108 to set various functions of the learning apparatus 100.

The display unit 110 is used to display an image. For example, the display unit 110 displays an image concerning an application executed by the learning apparatus 100. Furthermore, the display unit 110 may display the learning information stored in the storage unit 112. For example, the display unit 110 may display an electronic book stored in the storage unit 112. The storage unit 112 stores a program such as an application and an operating system executed by the learning apparatus 100. Furthermore, the storage unit 112 may store learning information. For example, the storage unit 112 may store text data concerning a textbook or image data concerning a lecture.

The sensor 114 detects the movement of the learning apparatus 100. For example, the sensor 114 includes an acceleration sensor, a gyro sensor, a pressure sensor, a geomagnetic sensor, and the like. The acceleration sensor detects an acceleration of the learning apparatus 100. The gyro sensor detects angular acceleration and angular velocity with respect to the learning apparatus 100. The atmospheric pressure sensor detects an atmospheric pressure, and calculates the altitude of the learning apparatus 100 on the basis of the detected atmospheric pressure. The geomagnetic sensor detects geomagnetism and calculates the orientation of the learning apparatus 100 on the basis of the detected geomagnetism. The microphone 116 acquires audio data from sounds around the learning apparatus 100.

### (2-2. Configuration of Server 300)

The configuration of the learning apparatus 100 according to the embodiment of the present disclosure has been described above. The configuration of the server 300 according to the embodiment of the present disclosure will be described below.

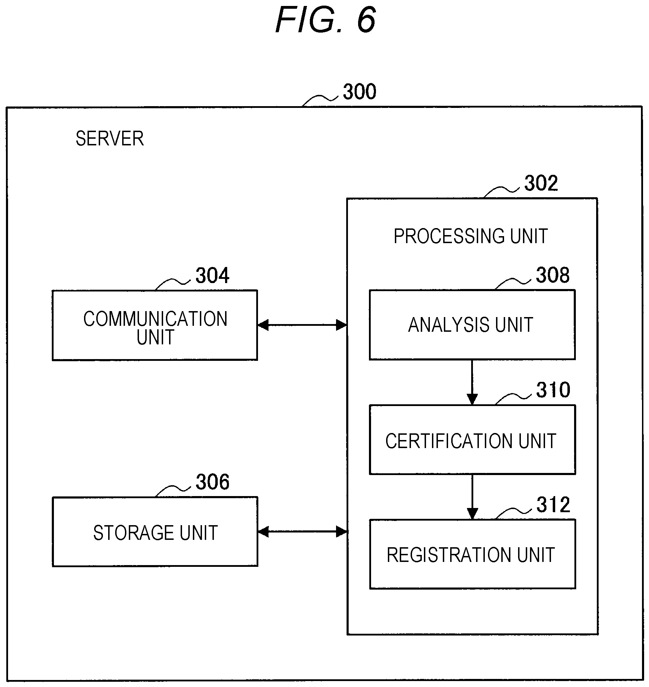

Fig. 6 is a diagram illustrating an example of the configuration of the server 300 that can perform processing according to an information processing method of the present embodiment. The server 300 includes, for example, a processing unit 302, a communication unit 304, and a storage unit 306. Furthermore, the processing unit 302 includes an analysis unit 308, a certification unit 310, and a registration unit 312.

The processing unit 302 processes a signal from each configuration of the server 300. For example, the processing unit 302 decodes a signal sent from the communication unit 304 and extracts data. Furthermore, the processing unit 302 reads data from the storage unit 306 and performs processing on the read data.

The analysis unit 308 analyzes learning information. For example, the analysis unit 308 analyzes text data using a vector space model. The vector space model expresses text data as vector data by using the number of occurrences or the occurrence rate of words included in the text data. Furthermore, the analysis unit 308 converts audio data into text data. Then, the analysis unit 308 converts the text data based on the audio data into vector data.

The certification unit 310 evaluates the relation and novelty of the learning information acquired from the learning apparatus 100. The certification unit 310 evaluates a similarity between a plurality of pieces of text data by comparing the plurality of pieces of text data expressed as vector data by the vector space model, for example. Furthermore, the certification unit 310 evaluates a similarity between a plurality of pieces of image data or image data by comparing the plurality of image data or the image data by using an existing image processing technology. The certification unit 310 evaluates the relation and novelty of the learning information acquired from the learning apparatus 100 on the basis of processing for performing such evaluation. Then, the certification unit 310 certifies a microlearning credit on the basis of the evaluation of the relation and novelty.

Furthermore, the certification unit 310 certifies a comprehensive learning credit on the basis of the certified microlearning credit and a predetermined condition. For example, when the predetermined number of microlearning credits is certified, the certification unit 310 certifies the comprehensive learning credit.

The registration unit 312 registers information concerning the certified comprehensive learning credit in the block chain data. The information concerning the comprehensive learning credit includes, for example, any one of information concerning a topic, information concerning a learning time, information concerning the number of credits of a microlearning credit, information concerning a degree of understanding of a learner, and information concerning a method for certifying a microlearning credit. Here, the information concerning the topic may include, for example, information concerning a subject included in a school curriculum. Furthermore, the information concerning the degree of understanding of the learner may be determined on the basis of a test score given by the server 300 in order to certify the comprehensive learning credit. In addition, the method for certifying a microlearning credit may include reading, taking a lecture, watching a video, talking, and the like.

The communication unit 304 is a communication unit that communicates with an external device by wired communication or wireless communication, and may perform communication by using, for example, a communication system conforming to Ethernet (registered trade mark). The storage unit 306 stores various data used by the processing unit 302.

### <3. Information Processing Method in Learning Management System>

The configuration of each device constituting the learning management system according to the embodiment of the present disclosure has been described above. The information processing method in the learning management system according to the embodiment of the present disclosure will be described below.

### (3-1. Information Processing Method Concerning Certification of Microlearning Credit)

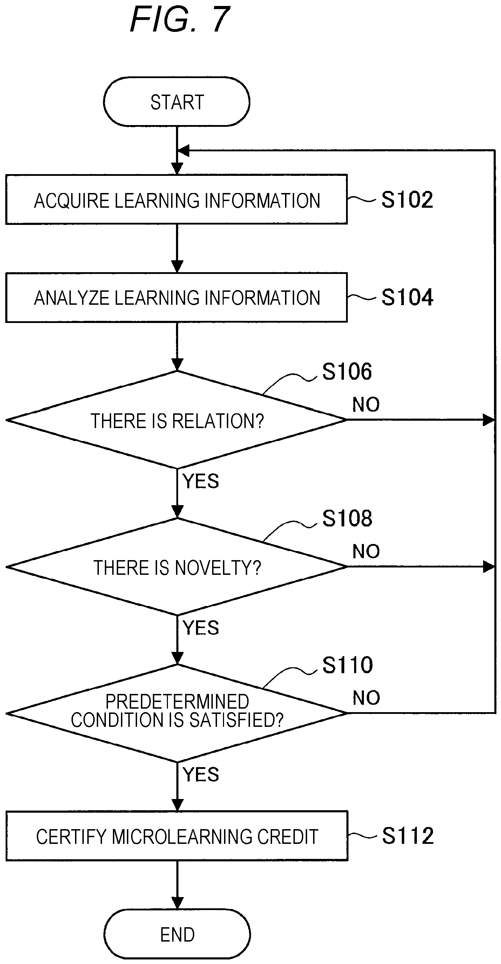

Fig. 7 is a diagram illustrating an example of the information processing method executed in the learning management system of the present embodiment. In particular, Fig. 7 illustrates an information processing method concerning the certification of a microlearning credit.

In S102, the analysis unit 308 acquires learning information from the learning apparatus 100. The learning information indicates information learned by the user as described above. Therefore, for example, when the user reads one page of a book, the learning apparatus 100 transmits text data read by the user to the server 300 as learning information. Furthermore, when the learning apparatus 100 acquires audio data by the microphone 116, the learning apparatus 100 transmits the audio data to the server 300. The learning information may be transmitted from the learning apparatus 100 at any time, or may be transmitted collectively at a fixed interval.

In S104, the analysis unit 308 analyzes the acquired learning information. For example, the analysis unit 308 converts the acquired text data into vector data using the vector space model. Furthermore, the analysis unit 308 converts the acquired audio data into text data and converts the converted text data into vector data.

In S106, the certification unit 310 determines whether or not the acquired learning information is related to a predetermined topic. For example, in a case where the topic is a passive state in English, the certification unit 310 uses the vector data described above to determine whether or not the acquired learning information is related to the passive state in English.

Note that the certification unit 310 may determine whether or not data stored in the storage unit 306 is related to the acquired learning information. Specifically, the certification unit 310 compares the data stored in the storage unit 306 as the learning information already learned by the user with the newly acquired learning information. For example, in a case where the user has already read a book A, content of the book A is stored in the storage unit 306 as learning information already learned by the user. On the other hand, newly acquired learning information may be learning information based on a book B. At this time, the certification unit 310 may determine whether or not the newly acquired learning information (content of the book B) is related to the learning information (content of the book A) already learned by the user stored in the storage unit 306.

In a case where the certification unit 310 determines in S106 that the acquired learning information is related to a predetermined topic, the processing proceeds to S108. In S108, the certification unit 310 determines whether or not the acquired learning information has novelty with respect to a predetermined topic. For example, the certification unit 310 determines whether or not the acquired learning information has novelty with respect to a predetermined topic on the basis of the data stored in the storage unit 306. That is, it is determined whether or not the user has learned new content for a predetermined topic.

Specifically, the certification unit 310 compares the data stored in the storage unit 306 as the learning information already learned by the user with the newly acquired learning information. For example, in a case where the user has already read up to 30 pages of a 100-page book, content of pages 1 to 30 is stored in the storage unit 306 as learning information already learned by the user. Then, the certification unit 310 compares the newly acquired learning information (content of page 31) with the learning information (content of pages 1 to 30) already learned by the user stored in the storage unit 306, and determines whether or not the newly acquired learning information has novelty with respect to a predetermined topic.

In S108, when the certification unit 310 determines that the acquired learning information is novel with respect to the predetermined topic, the processing proceeds to S110. In S110, the certification unit 310 determines whether or not the acquired learning information satisfies a predetermined condition. Here, the predetermined condition may be simply to have relation and novelty with respect to the predetermined topic. Furthermore, the predetermined condition may be that when the relation and novelty are represented by a numerical value calculated by a predetermined algorithm, the numerical value of the sum of the relation and novelty is not less than a predetermined threshold value. Furthermore, the predetermined condition may be that the learning by the user has been performed for a predetermined time. Accordingly, the credit is prevented from being certified even if the user simply flips a page and skips a book. Furthermore, the predetermined condition may be that the score of the test for measuring the degree of understanding of the user is not less than a predetermined score. Accordingly, the credit is prevented from being certified even if the user does not understand the learning.

If the certification unit 310 determines in S110 that the acquired learning information satisfies a predetermined condition, the processing proceeds to S112. In S112, the certification unit 310 certifies the microlearning credit with respect to the user. Then, the certification unit 310 stores information concerning the certified microlearning credit in the storage unit 306. Here, the information concerning the microlearning credit may include information concerning the learning time for acquiring the microlearning credit and information concerning the number of credits of the certified microlearning credit.

Note that, as described above, in the present embodiment, the learning information may include formal learning information and informal learning information. Here, the certification of the microlearning credit with respect to the formal learning information and the certification of the microlearning credit with respect to the informal learning information may be similarly performed by the information processing method described with reference to Fig. 7. In this case, the information concerning the microlearning credit may include information indicating that the microlearning credit is acquired on the basis of the formal learning information or information indicating that the microlearning credit is acquired on the basis of the informal learning information.

Furthermore, in the example described above, the microlearning credit is certified on the basis of the same kind of learning information. However, the certification of the microlearning credit may be performed on the basis of different types of learning information. That is, the certification unit 310 may evaluate relation and novelty on the basis of different types of learning information. Specifically, the certification unit 310 may evaluate relation and novelty by comparing learning information acquired on the basis of audio data with learning information acquired on the basis of text data. Furthermore, the certification unit 310 may evaluate relation and novelty by comparing learning information acquired on the basis of action information with learning information acquired on the basis of text data.

### (3-2. Information Processing Method concerning Certification of Comprehensive Learning Credit)

The information processing method concerning the certification of the microlearning credit in the learning management system has been described above. An information processing method concerning the certification of the comprehensive learning credit in the learning management system will be described below.

In S202, the certification unit 310 determines whether or not a plurality of microlearning credits has been certified. When the certification unit 310 determines that the plurality of microlearning credits has been certified, the processing proceeds to S204. In step S204, the certification unit 310 determines whether or not a predetermined condition is satisfied.

Here, the predetermined condition may be a condition concerning the number of credits of the certified microlearning credit. For example, the predetermined condition may be that the predetermined number of microlearning credits is certified.

Furthermore, the predetermined condition may be a condition based on the microlearning credit based on the formal learning information and/or the microlearning credit based on the informal learning information. For example, the predetermined condition may be that the predetermined number of microlearning credits based on the formal learning information has been certified. Furthermore, the predetermined condition may be that the predetermined number of microlearning credits based on the informal learning information has been certified. Further, the predetermined condition may be that the predetermined number of microlearning credits based on the formal learning information is certified, and the predetermined number of microlearning credits based on the informal learning information is also certified. Thus, by using the microlearning credit based on the formal or informal learning information to determine a predetermined condition, it is possible to certify the credit based on various pieces of learning information.

For example, when a predetermined condition is based on the number of credits of the microlearning credit based on the formal learning information, the quality of the learning information is ensured, thereby improving the reliability of a comprehensive learning credit to be certified. Furthermore, when the predetermined condition is based on the number of credits of the microlearning credit based on informal learning information, the autonomy of a user can be evaluated. Further, when the predetermined condition is based on the number of credits of the microlearning credit based on the formal learning information and the number of credits of the microlearning credit based on the informal learning information, a learning performed in a school or the like can be supplemented by a learning performed privately by a user.

Furthermore, in S204, the predetermined condition may be determined on the basis of the degree of understanding of a user. The degree of understanding of a user may be determined, for example, by the number of test scores on a predetermined topic to be tested by the server 300 after the predetermined number of microlearning credits has been certified. The user answers the test using the learning apparatus 100, and the learning apparatus 100 transmits the answer of the user to the server 300. Then, the server 300 calculates the degree of understanding of the user on the basis of the result of the test. Thus, by using the degree of understanding of the user for determining a predetermined condition, the comprehensive learning credit is certified when the user understands learning content.

Further, the predetermined condition may be determined on the basis of the learning time of the learning performed by the user before the microlearning credit is certified. In this way, by using the learning time to determine a predetermined condition, it is possible to guarantee that the user has performed the learning.

Furthermore, the predetermined condition may be determined by a combination of the number of credits of the microlearning credit, the degree of understanding of the user, and the learning time. Note that the predetermined condition may be determined by combining two of the above-described indices or by combining three of the above-described indices.

When the certification unit 310 determines in S204 that the predetermined condition is satisfied, the processing proceeds to S206. In S206, the certification unit 310 certifies the comprehensive learning credit. Then, in S208, the registration unit 312 registers information concerning the comprehensive learning credit certified in S206 in the block chain data.

### (3-3. Example of Credit Certification)

The information processing method for certifying the microlearning credit and the comprehensive learning credit has been described above. An example of credit certification by the above-described information processing method will be described below.

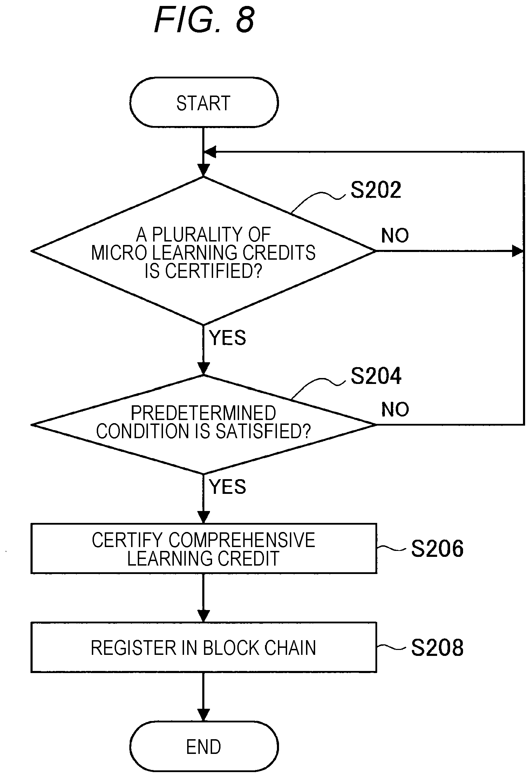

Fig. 9 is a diagram illustrating an example of credit certification by the information processing method described with reference to Figs. 7 and 8. An example in which the predetermined condition (condition for certifying a comprehensive learning credit) in S204 of Fig. 8 is the number of credits of the microlearning credit to be certified will be described below. Here, the condition for certifying a comprehensive learning credit is that 100 credits of microlearning credits are certified.

Furthermore, Fig. 9 illustrates an example in which a user A whose user ID is "abc1234" learns about a passive state in English. Here, the passive state in English is the above-described topic, and the topic may be a topic designated by a curriculum or syllabus of a predetermined organization such as a school, or a topic registered in advance by a user.

Initially, it is set that the user A is required to acquire 100 credits of microlearning credits to certify the comprehensive learning credit. Then, the user A performs the learning, whereby the microlearning credit is certified. For example, when 50 credits of microlearning credits are certified, it is recorded that 50 credits of microlearning credits are certified and the remaining microlearning credits are 50 credits.

Then, when the user A continues the learning and thus the number of certified microlearning credits becomes 100 credits and the number of remaining microlearning credits becomes 0 credits, the comprehensive learning credit is certified.

Note that, here, when the number of certified microlearning credits becomes 100 credits and the number of remaining microlearning credits becomes 0 credits, a test on a passive state in English may be conducted by the server 300 in order to test the degree of understanding of the user. The comprehensive learning credit may be certified by the score of the test.

Note that in the above example, a case where the topic is English has been described. However, the topic may be another topic. For example, the topic may be a topic concerning exercise. Furthermore, the topic concerning exercise may be, for example, a marathon. At this time, for example, one microlearning credit may be certified every time the user runs one kilometer. Furthermore, one microlearning credit may be certified for every time the user runs for 10 minutes.

### (3-4. Example of Information Registered in Block Chain)

One example of credit certification for the microlearning credit and the comprehensive learning credit has been described above. An example of information concerning the comprehensive learning credit registered in the block chain will be described below.

Fig. 10 is a diagram illustrating an example of information concerning the comprehensive learning credit registered in the block chain. In a learning information management system of the present embodiment, the information concerning the comprehensive learning credit as illustrated in Fig. 10 is registered in place of transaction information of an existing block chain such as Bitcoin or in association with transaction information of an existing block chain such as Bitcoin.

As illustrated in Fig. 10, in the learning information management system of the present embodiment, for example, a user ID, a topic (major and minor classifications), an understanding degree of a user, a learning time, the number of credits of certified microlearning credit, and a method for acquiring the microlearning credit may be registered in the block chain data.

As described above, the major classifications of the topic may include foreign languages, mathematics, chemistry, physics, geology, history, programming, cooking, engine control, mechanical engineering, meteorology, astronomy, animation, and the like. Furthermore, the minor classifications of the topic may also include, for example, passive, preposition usage, current completion, speaking, listening, and the like when the large classification of topics is in English.

Furthermore, the major classification of the topic may also be a topic concerning a user's action or exercise. For example, the major classification of the topic concerning action or exercise may include baseball, soccer, running, walking, and the like. Furthermore, the minor classification of the topic may include pitching, batting, fielding, base running, and the like in a case where the major classification of the topic is baseball. In this way, learning is managed in more detail by classifying the topic into major and minor classifications.

The understanding level may be determined on the basis of the score of the test conducted for the user. Furthermore, the method for acquiring the microlearning credit may also include information indicating whether the microlearning credit has been certified on the basis of formal learning information or whether the microlearning credit has been certified on the basis of informal learning information.

Furthermore, in Fig. 10, a learning time of 10 hours is illustrated as a time until all the microlearning credits are acquired. However, the learning time may be recorded in more detail. For example, as the learning time, the time until each microlearning credit is acquired may be recorded.

Here, the method for acquiring a micro credit based on the formal learning information may include, for example, reading a textbook distributed from a predetermined organization such as a school, taking a lecture from a predetermined organization. Furthermore, the method for acquiring the micro credit based on the informal learning information may include a conversation with a third party such as a friend, reading a book purchased by the user, attending a private study meeting with a friend or colleague, and the like.

As described above, by managing the information concerning the comprehensive learning credit with the block chain data, management is performed with respect to the microlearning performed by the user in a state where the information is not altered and in a state where the information is easily available to a third party.

### <4. Hardware Configuration of Each Device>

The learning management system according to the present embodiment and the information processing method executed in the learning management system has been described above. The hardware configuration of each device of the learning management system will be described below.

### (4-1. Hardware Configuration of Learning Apparatus)

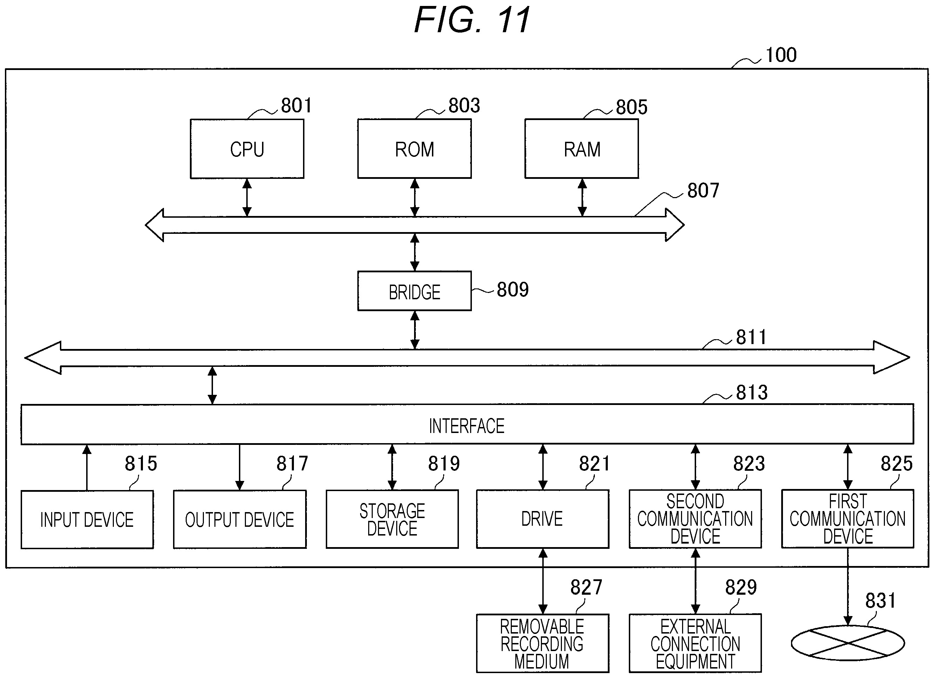

The hardware configuration of the learning apparatus 100 according to the embodiment of the present disclosure will be described in detail below with reference to Fig. 11. Fig. 11 is a block diagram for explaining the hardware configuration of the learning apparatus 100 (for example, a smartphone) according to the embodiment of the present disclosure.

The learning apparatus 100 mainly includes a CPU 801, a ROM 803, and a RAM 805. Furthermore, the learning apparatus 100 further includes a host bus 807, a bridge 809, an external bus 811, an interface 813, an input device 815, an output device 817, a storage device 819, a drive 821, a second communication device 823, and a first communication device 825.

The CPU 801 functions as a central processing unit and a control unit, and controls the overall operation of the learning apparatus 100 or a part thereof in accordance with various programs recorded in the ROM 803, the RAM 805, the storage device 819, or a removable recording medium 827. Note that the CPU 801 may have a function of the processing unit 102. The ROM 803 stores programs, operation parameters, and the like used by the CPU 801. The RAM 805 primarily stores programs used by the CPU 801, parameters that change as appropriate in the execution of the programs, and the like. These are mutually connected by the host bus 807 constituted by an internal bus such as a CPU bus.

The host bus 807 is connected to the external bus 811 such as a peripheral component interconnect/interface (PCI) bus via the bridge 809.

The input device 815 is operation means operated by a user, such as an electrostatic or pressure sensitive touch panel, a button, a switch, and a jog dial. Further, the input device 815 includes, for example, an input control circuit that generates an input signal on the basis of information input by a user using the above operation means and outputs the signal to the CPU 801. By operating the input device 815, the user can input various data to the learning apparatus 100 and instruct the processing operation. Note that the input device 815 may have the function of the operation unit 108.

The output device 817 is a device capable of visually or audibly notifying the user of the acquired information. As such a device, there are a display device such as a liquid crystal display device, an EL display device and a lamp, or an audio output device such as a speaker and a headphone. The output device 817 outputs a result obtained by various pieces of processing performed by the learning apparatus 100, for example. Specifically, the display device displays, as a text or an image, the result obtained by various pieces of processing performed by the learning apparatus 100. On the other hand, the audio output device converts an audio signal including a reproduced audio data, acoustic data, and the like into an analog signal and outputs the analog signal. Note that the display device of the output device 817 may have the function of the display unit 110.

The storage device 819 is a device for storing data used in the learning apparatus 100. The storage device 819 includes, for example, a magnetic storage device such as a hard disk drive (HDD), a semiconductor storage device, an optical storage device, a magneto-optical storage device, or the like. The storage device 819 stores programs and various data executed by the CPU 801, and various data acquired from the outside.

The drive 821 is a reader/writer for a recording medium, and is incorporated in or attached externally to the learning apparatus 100. The drive 821 reads information recorded in the removable recording medium 827 such as a magnetic disk, an optical disk, a magneto-optical disk, or a semiconductor memory, and outputs the information to the RAM 805. Furthermore, the drive 821 can also write a record onto the removable recording medium 827 such as a magnetic disk, an optical disk, a magneto-optical disk, or a semiconductor memory. The removable recording medium 827 is, for example, a DVD medium, an HD-DVD medium, a Blu-ray (registered trade mark) medium, or the like. Furthermore, the removable recording medium 827 may be a CompactFlash (CF) (registered trade mark), a flash memory, a secure digital memory card (SD memory card), or the like. Furthermore, the removable recording medium 827 may be, for example, an integrated circuit card (IC card) or electronic equipment or the like on which a non-contact type IC chip is mounted.

The second communication device 823 is used to exchange data with external connection equipment by establishing communication with external connection equipment 829. Examples of the second communication device 823 include an IEEE 802.11 port, an IEEE 802.15 port, and the like. When connected to the external connection equipment 829 by the second communication device, the learning apparatus 100 acquires various data directly from the external connection equipment 829 or transmits various data to the external connection equipment 829.

The first communication device 825 is a communication interface including, for example, a communication device for connecting to a communication network 831, and the like. The first communication device 825 is, for example, a modem circuit that operates while conforming to a standard defined by 3GPP. A communication system conforming to the standard defined by 3GPP is, for example, W-CDMA, LTE or the like. The first communication device 825 can transmit and receive a signal or the like to and from, for example, the Internet or a network of a communication carrier in accordance with a predetermined protocol such as TCP/IP. Furthermore, the communication network 831 connected to the first communication device 825 includes a network or the like connected by wire, and may be, for example, the Internet, a network of a communication carrier or the like.

### (4-2. Hardware Configuration of Server)

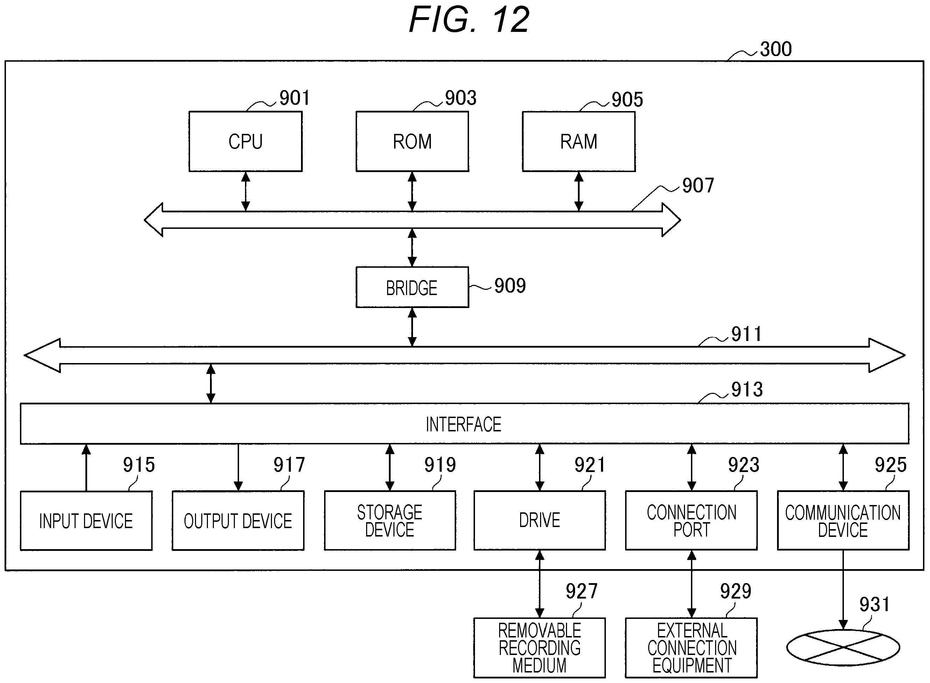

The hardware configuration of the server 300 according to the embodiment of the present disclosure will be described in detail below with reference to Fig. 12. Fig. 12 is a block diagram for explaining the hardware configuration of the server 300 according to the embodiment of the present disclosure.

The server 300 mainly includes a CPU 901, a ROM 903, and a RAM 905. Furthermore, the server 300 further includes a host bus 907, a bridge 909, an external bus 911, an interface 913, an input device 915, an output device 917, a storage device 919, a drive 921, a connection port 923, and a communication device 925.

The CPU 901 functions as a central processing unit and a control unit, and controls all or part of the operation in the server 300 according to various programs recorded in the ROM 903, the RAM 905, the storage device 919, or a removable recording medium 927. Note that the CPU 901 may have a function of the processing unit 302. Further, the CPU 901 may configure each of the analysis unit 308, the certification unit 310, and the registration unit 312. The ROM 903 stores programs, operation parameters, and the like used by the CPU 901. The RAM 905 primarily stores programs used by the CPU 901, parameters that change as appropriate in the execution of the programs, and the like. These are mutually connected by the host bus 907 constituted by an internal bus such as a CPU bus.

The input device 915 is operation means operated by a user such as a mouse, a keyboard, a touch panel, a button, a switch, and a lever. Further, the input device 915 includes, for example, an input control circuit that generates an input signal on the basis of information input by a user using the above operation means and outputs the input signal to the CPU 901. By operating the input device 915, the user can input various data to the server 300 and instruct the processing operation.

The output device 917 is a device capable of visually or audibly notifying the user of the acquired information. As such a device, there are a display device such as a CRT display device, a liquid crystal display device, a plasma display device, an EL display device and a lamp, an audio output device such as a speaker and a headphone, a printer device, a mobile phone, and a facsimile. The output device 917 outputs a result obtained by various pieces of processing performed by the server 300, for example. Specifically, the display device displays the result obtained by the various pieces of processing performed by the server 300 as a text or an image. On the other hand, the audio output device converts an audio signal including a reproduced audio data, acoustic data, and the like into an analog signal and outputs the analog signal.

The storage device 919 is a device for data storage configured as an example of the storage unit 306 of the server 300. The storage device 919 includes, for example, a magnetic storage device such as a hard disk drive (HDD), a semiconductor storage device, an optical storage device, a magneto-optical storage device, or the like. The storage device 919 stores programs and various data to be executed by the CPU 901, and various data acquired from the outside. Note that the storage device 919 may have the function of the storage unit 306.

The drive 921 is a reader/writer for a recording medium, and is installed in or outside the server 300. The drive 921 reads information recorded in the removable recording medium 927 such as a magnetic disk, an optical disk, a magneto-optical disk, or a semiconductor memory, and outputs the information to the RAM 905. Furthermore, the drive 921 can also write a record onto the removable recording medium 927 such as a magnetic disk, an optical disk, a magneto-optical disk, or a semiconductor memory. The removable recording medium 927 is, for example, a DVD medium, an HD-DVD medium, a Blu-ray (registered trade mark) medium, or the like. Furthermore, the removable recording medium 927 may be a CompactFlash (CF) (registered trade mark), a flash memory, a secure digital memory card (SD memory card), or the like. Furthermore, the removable recording medium 927 may be, for example, an integrated circuit card (IC card) or electronic equipment or the like on which a non-contact type IC chip is mounted.

The connection port 923 is a port for directly connecting a device to the server 300. Examples of the connection port 923 include a universal serial bus (USB) port, an IEEE 1394 port, a small computer system interface (SCSI) port, and the like. As another example of the connection port 923, there are an RS-232C port, an optical audio terminal, a high-definition multimedia interface (HDMI (registered trademark)) port, and the like. By connecting the external connection equipment 929 to the connection port 923, the server 300 acquires various data directly from the external connection equipment 929 or provides various data to the external connection equipment 929.

The communication device 925 is, for example, a communication interface including a communication device for connecting to a communication network 931, and the like. The communication device 925 is a communication card for, for example, a wired or wireless local area network (LAN), a wireless USB (WUSB), or the like. Furthermore, the communication device 925 may be a router for optical communication, a router for asymmetric digital subscriber line (ADSL), a modem for various communications, or the like. The communication device 925 can transmit and receive a signal or the like to and from the Internet or other communication devices, for example, in accordance with a predetermined protocol such as TCP/IP. Furthermore, the communication network 931 connected to the communication device 925 includes a network or the like connected by wire or wireless, and may be, for example, the Internet, a home LAN, infrared communication, radio wave communication, satellite communication, or the like.

### <5. Additional Notes>

While the preferred embodiments of the present disclosure have been described in detail with reference to the accompanying drawings, the technical scope of the present disclosure is not limited to such examples. It is apparent to those skilled in the art of the present disclosure that various changes or modifications can be conceived within the scope of the technical idea described in the claims, and these are also naturally within the technical scope of the present disclosure.

For example, in the example described above, the certification of the credit has been performed at the server 300. However, the certification of the credit may be performed by the learning apparatus 100. The learning apparatus 100 may have the function of the analysis unit 308 and the certification unit 310 of the server. Furthermore, the learning apparatus 100 may register information concerning the certified comprehensive learning credit in the block chain. That is, the learning apparatus 100 may have the function of the registration unit 312 of the server 300.

Furthermore, in the example described above, the information concerning the learning credit has been registered in the block chain data. However, information concerning the learning credit may be registered in a system other than the block chain. For example, the information concerning the learning credit may be managed by a server group constructing a cloud system. Furthermore, the information concerning the learning credit may be managed by an existing P2P network.

Furthermore, information processing of the present embodiment may be performed by an information processing apparatus such as a tablet computer, a desktop computer, a PDA, and an in-vehicle device. Furthermore, the server 300 may not be wired to other devices and may be a portable computer.

Furthermore, a computer program may be provided for causing the processing unit 102 of the learning apparatus 100 and the processing unit 302 of the server 300 to perform operations described above with reference to Figs. 7 and 8. Furthermore, a storage medium storing such a program may also be provided.

### <6. Conclusion>

As described above, in the learning information management system of the present disclosure, the block chain data is used to manage information concerning the learning credit. As a result, the information concerning the learning credit is retained on the network in a state where the learning credit is not altered. Furthermore, by using the block chain data, when a third party who wants to use the information contained in the block chain has a predetermined authority, the third party can access the information contained in the block chain.

Furthermore, in the learning information management system of the present disclosure, a microlearning credit based on microlearning is managed. Accordingly, an extensive microlearning management that has been difficult to manage in an existing system is performed. In addition, the above-described certification of the credit is performed on the basis of formal learning information and/or informal learning information. In this way, the credit certified on the basis of the informal learning information which has been difficult to manage in the existing system is managed.

Note that the following configuration is also within the technical scope of the present disclosure.
(1) An information processing apparatus including a processing unit that certifies a second learning credit on the basis of a first learning credit that is certified on the basis of learning information and a predetermined condition, and registers information concerning the certified second learning credit in a P2P database.
(2) The information processing apparatus according to (1), in which the processing unit determines a relation between the learning information and a predetermined topic and a novelty of the learning information with respect to the predetermined topic, and certifies the first learning credit on the basis of a result of the determination.
(3) The information processing apparatus according to (2), in which the processing unit determines the relation and the novelty between the learning information and the topic, using a spatial vector model.
(4) The information processing apparatus according to any one of (1) to (3), in which the learning information includes one or both of formal learning information managed by a predetermined organization and informal learning information not managed by a predetermined organization.
(5) The information processing apparatus according to any one of (2) to (4), in which the topic relates to a learning process of a predetermined organization.
(6) The information processing apparatus according to any one of (2) to (4), in which the topic is registered by a user.
(7) The information processing apparatus according to any one of (1) to (6), in which the predetermined condition for certifying the second learning credit relates to the number of credits of the certified first learning credit.
(8) The information processing apparatus according to any one of (1) to (6), in which the predetermined condition for certifying the second learning credit relates to a degree of understanding of a user.
(9) The information processing apparatus according to any one of (1) to (6), in which the predetermined condition for certifying the second learning credit includes a learning time.
(10) The information processing apparatus according to (4), in which the processing unit determines the predetermined condition for certifying the second learning credit on the basis of the first learning credit certified on the basis of the informal learning information.
(11) The information processing apparatus according to (4), in which the processing unit determines the predetermined condition for certifying the second learning credit on the basis of the first learning credit certified on the basis of the formal learning information and the first learning credit certified on the basis of the informal learning information.
(12) The information processing apparatus according to any one of (1) to (11), in which the information concerning the second learning credit includes any one of information concerning a topic, information concerning a learning time, information concerning the number of credits of the first learning credit, information concerning a degree of understanding of a user, and information concerning a method for certifying the first learning credit.
(13) The information processing apparatus according to any one of (1) to (12), in which the learning information for certifying the first learning credit includes text information, audio information, image information, and action information.
(14) An information processing method for causing a computer to certify a second learning credit on the basis of a first learning credit certified on the basis of learning information and a predetermined condition, and register information concerning the certified second learning credit in a P2P database.

### REFERENCE SIGNS LIST

- 100: Learning apparatus
- 102: Processing unit
- 104: First communication unit
- 106: Second communication unit
- 108: Operation unit
- 110: Display unit
- 112: Storage unit
- 114: Sensor
- 116: Microphone
- 200: Network
- 300: Server
- 302: Processing unit
- 304: Communication unit
- 306: Storage unit
- 308: Analysis unit
- 310: Certification unit
- 312: Registration unit

## Claims

1. An information processing apparatus comprising a processing unit that certifies a second learning credit on a basis of a first learning credit that is certified on a basis of learning information and a predetermined condition, and registers information concerning the certified second learning credit in a P2P database.

2. The information processing apparatus according to claim 1, wherein the processing unit determines a relation between the learning information and a predetermined topic and a novelty of the learning information with respect to the predetermined topic, and certifies the first learning credit on a basis of a result of the determination.

3. The information processing apparatus according to claim 2, wherein the processing unit determines the relation and the novelty between the learning information and the topic, using a spatial vector model.

4. The information processing apparatus according to claim 1, wherein the learning information includes one or both of formal learning information managed by a predetermined organization and informal learning information not managed by a predetermined organization.

5. The information processing apparatus according to claim 2, wherein the topic relates to a learning process of a predetermined organization.

6. The information processing apparatus according to claim 2, wherein the topic is registered by a user.

7. The information processing apparatus according to claim 1, wherein the predetermined condition for certifying the second learning credit relates to the number of credits of the certified first learning credit.

8. The information processing apparatus according to claim 1, wherein the predetermined condition for certifying the second learning credit relates to a degree of understanding of a user.

9. The information processing apparatus according to claim 1, wherein the predetermined condition for certifying the second learning credit includes a learning time.

10. The information processing apparatus according to claim 4, wherein the processing unit determines the predetermined condition for certifying the second learning credit on a basis of the first learning credit certified on a basis of the informal learning information.

11. The information processing apparatus according to claim 4, wherein the processing unit determines the predetermined condition for certifying the second learning credit on a basis of the first learning credit certified on a basis of the formal learning information and the first learning credit certified on a basis of the informal learning information.

12. The information processing apparatus according to claim 1, wherein the information concerning the second learning credit includes any one of information concerning a topic, information concerning a learning time, information concerning the number of credits of the first learning credit, information concerning a degree of understanding of a user, and information concerning a method for certifying the first learning credit.

13. The information processing apparatus according to claim 1, wherein the learning information for certifying the first learning credit includes text information, audio information, image information, and action information.

14. An information processing method for causing a computer to certify a second learning credit on a basis of a first learning credit certified on a basis of learning information and a predetermined condition, and register information concerning the certified second learning credit in a P2P database.
